# EUROPEAN PATENT APPLICATION

(11) **EP 4 529 263 A1**
(43) Date of publication of application: **26.03.2025**
(21) Application number: 23834526.8
(22) Date of filing: 22.05.2023
(51) Int. Cl.: H04W 28/02

(54) **NETWORK CONNECTION METHOD, MOBILE TERMINAL, AND STORAGE MEDIUM**

(30) Priority: 05.07.2022 CN 202210784298
(71) Applicant: ZTE Corporation, Shenzhen, Guangdong 518057 (CN)
(72) Inventor: WU, Ping, Shenzhen, Guangdong 518057 (CN)
(74) Representative: Savi, Massimiliano
(86) International application number: PCT/CN2023/095551
(87) International publication number: WO 2024/007752

(57) **Abstract**

Provided in the embodiments of the present application are a network connection method, a mobile terminal, and a storage medium. The method comprises: acquiring a first network quality parameter of a first network and a second network quality parameter of a second network (S100); acquiring the application type and a demand network quality parameter of the current application run by a mobile terminal (S200); obtaining, according to the application type, a parameter priority, which is used for determining the type of a network quality parameter preferentially considered in network selection (S300); confirming, according to the parameter priority, a plurality of target parameters of the same type from the first network quality parameter, the second network quality parameter and the demand network quality parameter, and comparing the plurality of target parameters to perform network selection, so as to obtain a selection result (S400); and determining, according to the selection result and from the first network and the second network, a target network for connection (S500).

## Description

### CROSS-REFERENCE TO RELATED APPLICATION

This application is filed on the basis of Chinese patent application No. 202210784298.4 filed July 5, 2022, and claims priority to the Chinese patent application, the entire contents of which are incorporated herein by reference.

### TECHNICAL FIELD

Embodiments of the present disclosure relate to, but not limited to, the field of communication, and in particular, to a network connection method, a mobile terminal, and a storage medium.

### BACKGROUND

Currently, a mobile terminal generally selects to connect to a Wireless Fidelity (Wi-Fi) network or a mobile network according to real-time detection of access levels of the Wi-Fi network and the mobile network or according to a default priority setting made by the user. Different types of applications on the mobile device have varying requirements for network quality. For example, a video application demands higher throughput, while a gaming application requires lower latency. However, traditional network selection methods for mobile devices do not take application-specific network quality requirements into account, often resulting in a chosen network that fails to meet the user's access needs.

### SUMMARY

The following is a summary of the subject matter set forth in this description. This summary is not intended to limit the scope of protection of the claims.

Embodiments of the present disclosure provide a network connection method, a mobile terminal, and a storage medium.

In accordance with a first aspect of the present disclosure, an embodiment provides a network connection method, applied to a mobile terminal, the network connection method including: acquiring a first network quality parameter of a first network and a second network quality parameter of a second network; acquiring an application type and a required network quality parameter of a current application run in a mobile terminal; obtaining a preferential parameter option according to the application type, where the preferential parameter option is used for determining a type of a network quality parameter to be preferentially considered in network selection; determining a plurality of target parameters of the same type from the first network quality parameter, the second network quality parameter, and the required network quality parameter according to the preferential parameter option, comparing the plurality of target parameters, and performing network selection to obtain a selection result; and determining a target network from the first network and the second network according to the selection result and connecting to the target network.

In accordance with a second aspect of the present disclosure, an embodiment provides a mobile terminal, including: a memory, a processor, and a computer program stored in the memory and executable by the processor, where the computer program, when executed by the processor, causes the processor to implement the network connection method described above.

In accordance with a third aspect of the present disclosure, an embodiment provides a computer-readable storage medium, storing computer-executable instructions which, when executed by a processor, cause the processor to implement the network connection method described above.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram showing connection among a mobile terminal, a wireless data terminal, and a network providing terminal;
FIG. 2 is a flowchart of a network connection method according to an embodiment of the present disclosure;
FIG. 3 is a detailed flowchart of S100;
FIG. 4 is a detailed flowchart of S110;
FIG. 5 is a detailed flowchart of S111;
FIG. 6 is a detailed flowchart of S400 in a case where the preferential parameter option is a delay;
FIG. 7 is a detailed flowchart of S400 in a case where the preferential parameter option is a throughput rate; and
FIG. 8 is a structural diagram of a mobile terminal according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

The present disclosure provides a network connection method, a mobile terminal, and a storage medium. The method includes: acquiring a first network quality parameter of a first network and a second network quality parameter of a second network; acquiring an application type and a required network quality parameter of a current application run in a mobile terminal; obtaining a preferential parameter option according to the application type, where the preferential parameter option is used for determining a type of a network quality parameter to be preferentially considered in network selection; determining a plurality of target parameters of the same type from the first network quality parameter, the second network quality parameter, and the required network quality parameter according to the preferential parameter option, comparing the plurality of target parameters, and performing network selection to obtain a selection result; and determining a target network from the first network and the second network according to the selection result and connecting to the target network. According to the type and the network Quality of Service (QoS) requirement of the current application run in the mobile terminal, the mobile terminal dynamically connects to a network that can meet the requirement, thereby providing an optimal network service and improving the user's network experience.

The embodiments of the present disclosure will be further described in detail below in conjunction with the accompanying drawings.

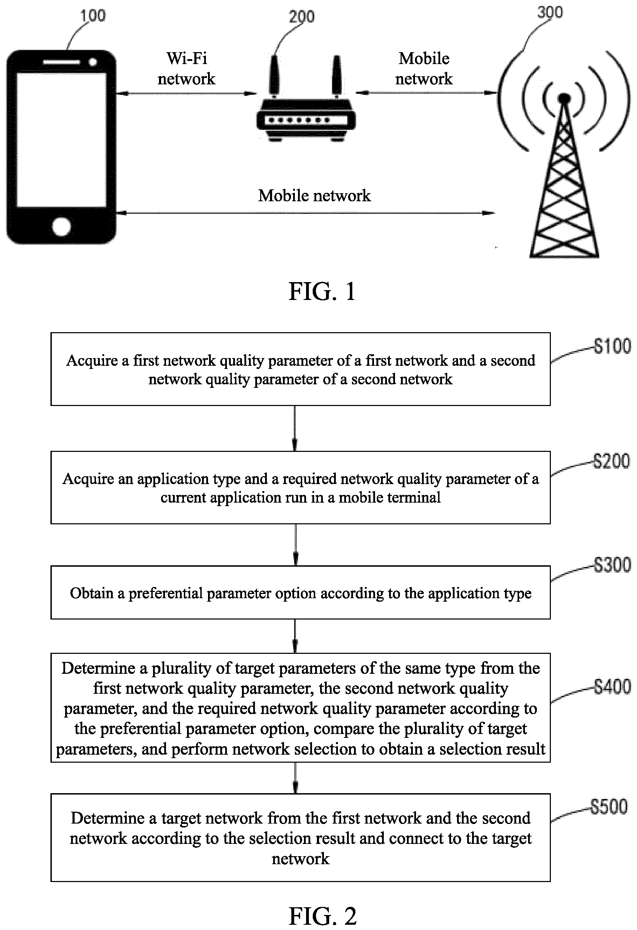

An embodiment of the present disclosure provides a network connection method. FIG. 2 is a flowchart of a network connection method. The network connection method includes, but not limited to, the following steps S100-S500.

At S100, a first network quality parameter of a first network and a second network quality parameter of a second network are acquired.

At S200, an application type and a required network quality parameter of a current application run in a mobile terminal are acquired.

At S300, a preferential parameter option is obtained according to the application type.

At S400, a plurality of target parameters of the same type are determined from the first network quality parameter, the second network quality parameter, and the required network quality parameter according to the preferential parameter option, the plurality of target parameters are compared, and network selection is performed to obtain a selection result.

At S500, a target network is determined from the first network and the second network according to the selection result and the target network is connected to.

It can be understood that the mobile terminal 100 is a terminal device that can be used to access the Internet through a wireless network technology while moving, and its mobility is mainly reflected in mobile communication capabilities and portability. The mobile terminal 100 may include a mobile phone, a notebook computer, a tablet computer, etc.

The first network is a Wi-Fi network. The Wi-Fi technology is a wireless local area network technology based on IEEE 802.11 standards. The mobile terminal 100 can establish a Wi-Fi connection within signal coverage of a wireless data terminal 200. The second network is a mobile network, e.g., a 4th Generation (4G) mobile network or a 5th Generation (5G) mobile network. It can be understood that the first network and the second network are two different networks. Further, the first network and the second network are two networks of different types. Of course, in some other embodiments, the first network and the second network may also be other types of networks.

The mobile terminal 100 has a capability of establishing a Wi-Fi connection through a Wi-Fi network, and has a capability of establishing a network connection through a 4G mobile network or a 5G mobile network.

Limited by the transmission distance, obstacles such as partitions and walls, and other factors, the Wi-Fi network is likely to experience degraded wireless signal penetration and reduced coverage. If the mobile terminal 100 is distant from a router or there is a partition between the mobile terminal 100 and the router, the mobile terminal 100 may still be able to detect a Wi-Fi signal, but the strength of the Wi-Fi signal is weak, leading to low network QoS of the Wi-Fi network, and failing to provide smooth network access for the user through the Wi-Fi network. In another case, if the mobile terminal 100 moves further away from a serving base station of the 4G mobile network or the 5G mobile network, or signal transmission from the 4G mobile network or the 5G mobile network to the mobile terminal 100 is interfered, the network QoS of the 4G mobile network or the 5G mobile network will be affected, failing to provide smooth network access for the user through the 4G mobile network or the 5G mobile network. In contrast, the network connection method of the present disclosure allows for automatic switching of the mobile terminal to an optimal network without manual intervention of the user.

When the user uses the mobile terminal 100 for network access, the required network quality parameter to be preferentially considered varies with different service types. For example, when the mobile terminal 100 is used to watch a video, online video buffering is required, so the throughput rate needs to be preferentially considered. When the mobile terminal 100 is used to play a game which requires a low delay, the delay needs to be preferentially considered. The network connection method of the present disclosure frees the user from manually performing network switching when the current application run in the mobile terminal 100 requires a low delay but the current network that the mobile terminal 100 connects to has a high delay or when the current application run in the mobile terminal 100 requires a high throughput rate but the current network that the mobile terminal 100 connects to has a low throughput rate, and can comprehensively consider the type and the required network quality parameter of the current application run in the mobile terminal 100, thereby achieving automatic switching to an optimal network.

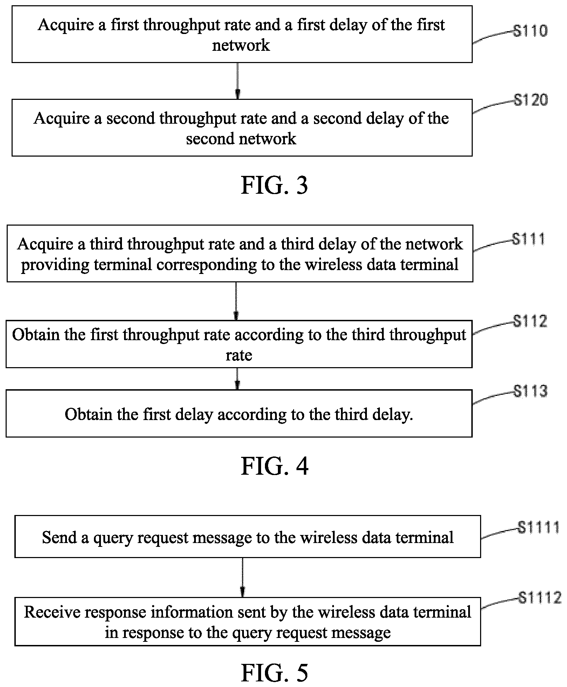

Referring to FIG. 3, S 100 of acquiring a first network quality parameter of a first network and a second network quality parameter of a second network includes, but not limited to, the following steps S110 and S120.

At S110, a first throughput rate and a first delay of the first network are acquired.

At S120, a second throughput rate and a second delay of the second network are acquired.

In this embodiment, S110 of acquiring a first throughput rate and a first delay of the first network includes acquiring a throughput rate and a delay of a Wi-Fi network path of the mobile terminal 100.

In this embodiment, S120 of acquiring a second throughput rate and a second delay of the second network includes acquiring a throughput rate and a delay of a mobile network path of the mobile terminal 100.

Throughput rate and delay are two parameters that reflect the QoS of a network. It can be understood that in some other embodiments, other QoS parameters such as packet loss rate of data transmitted, bandwidth of network transmission, and delay jitter may also be used as the first network quality parameter of the first network and the second network quality parameter of the second network.

FIG. 1 is a schematic diagram showing connection among the mobile terminal 100, the wireless data terminal 200, and a network providing terminal 300. The mobile terminal 100 is connected to the wireless data terminal 200 through the first network, i.e., the mobile terminal 100 establishes a Wi-Fi connection to the wireless data terminal 200 through the Wi-Fi network. The wireless data terminal 200 has a Wide Area Network (WAN) interface for connecting to a 4G mobile network or a 5G mobile network, and the wireless data terminal 200 establishes a network connection to a network providing terminal 300 through a 4G mobile network or a 5G mobile network. In addition, the mobile terminal 100 is connected to a network providing terminal 300 through a 4G mobile network or a 5G mobile network. It can be understood that the network providing terminal 300 to which the mobile terminal 100 is connected may be the same as or different from the network providing terminal 300 to which the wireless data terminal 200 is connected. For example, the wireless data terminal 200 is a router, and the network providing terminal 300 is a base station. When the wireless data terminal 200 is connected to the base station by a 4G network technology, a Public Data Network (PDN) connection is realized between the wireless data terminal 200 and the base station. When the wireless data terminal 200 is connected to the base station by a 5G network technology, the connection between the wireless data terminal 200 and the base station is realized through a Protocol Data Units (PDU) session.

Referring to FIG. 4, S110 of acquiring a first throughput rate and a first delay of the first network includes, but not limited to, the following steps S111-S113.

At S111, a third throughput rate and a third delay of the network providing terminal corresponding to the wireless data terminal are acquired.

At S112, the first throughput rate is obtained according to the third throughput rate.

At S113, the first delay is obtained according to the third delay.

For S111, during the process of the wireless data terminal 200 establishing a network connection to the base station through a 4G mobile network or a 5G mobile network, the base station delivers a third throughput rate and a third delay through the 4G mobile network or the 5G mobile network. After receiving the third throughput rate and the third delay delivered by the base station, the wireless data terminal 200 stores the third throughput rate and the third delay in an internal memory of the wireless data terminal 200.

Referring to FIG. 5, acquiring a third throughput rate and a third delay of the network providing terminal 300 corresponding to the wireless data terminal 200 includes, but not limited to, the following steps S1111 and S1112.

At S1111, a query request message is sent to the wireless data terminal.

At S1112, response information sent by the wireless data terminal in response to the query request message is received, where the response information includes the third throughput rate and the third delay.

After the mobile terminal 100 establishes a network connection to the wireless data terminal 200 through the first network, the mobile terminal 100 sends a query request message to the wireless data terminal 200 through the first network to query the third throughput rate and the third delay of the network providing terminal 300 corresponding to the wireless data terminal 200. After receiving the query request message sent by the mobile terminal 100, the wireless data terminal 200 reads the third throughput rate and the third delay stored in the internal memory of the wireless data terminal 200, and then sends response information to the mobile terminal 100 in response to the query request message, where the response information carries information of the third throughput rate and the third delay. The mobile terminal 100 receives the response information sent by the wireless data terminal 200, and acquires the third throughput rate and the third delay of the network providing terminal 300 corresponding to the wireless data terminal 200.

For S112 and S113, in a simplest case, the throughput rate and the delay acquired by the mobile terminal 100 from the wireless data terminal 200 are directly determined as the throughput rate and the delay of the Wi-Fi network path of the mobile terminal 100. In other words, obtaining the first throughput rate according to the third throughput rate includes: determining the third throughput rate as the first throughput rate; and obtaining the first delay according to the third delay includes: determining the third delay as the first delay.

However, because a Wi-Fi network connection between the mobile terminal 100 and the wireless data terminal 200 generally has impact on the throughput rate and the delay of the Wi-Fi network path, this impact needs to be considered during the calculation of the first throughput rate and the first delay according to the third throughput rate and the third delay.

It can be understood that if an agreed throughput rate between the mobile terminal 100 and the wireless data terminal 200 is less than a data throughput rate meeting network QoS required by the 4G or 5G mobile network connection of the wireless data terminal 200, the agreed throughput rate of the Wi-Fi network path becomes a bottleneck which hinders the throughput rate of the Wi-Fi network path from reaching the third throughput rate of the 4G or 5G mobile network connection of the wireless data terminal 200. In this case, obtaining the first throughput rate according to the third throughput rate includes: acquiring an agreed throughput rate between the mobile terminal 100 and the wireless data terminal 200; and selecting the smaller one of a value of the third throughput rate and a value of the agreed throughput rate as the first throughput rate. In other words, when the third throughput rate is greater than the agreed throughput rate, the agreed throughput rate is determined as the first throughput rate of the first network; when the third throughput rate is less than the agreed throughput rate, the third throughput rate is determined as the first throughput rate of the first network.

It can be understood that the Wi-Fi network connection between the mobile terminal 100 and the wireless data terminal 200 adds an additional delay to the delay which satisfied the network QoS required by the 4G or 5G mobile network connection of the wireless data terminal 200, the additional delay between the mobile terminal 100 and the wireless data terminal 200 may be obtained through measurement, and the additional delay is taken into account in the delay of the Wi-Fi network connection, to obtain an actual delay of the Wi-Fi network connection. In this case, obtaining the first delay according to the third delay includes: acquiring an additional delay between the mobile terminal 100 and the wireless data terminal 200; and determining a sum of the third delay and the additional delay as the first delay.

For S120, the mobile terminal 100 is connected to the base station through a 4G mobile network or a 5G mobile network; and a throughput rate and a delay of a mobile network path of the mobile terminal 100 are acquired through measurement.

For S200, when the user uses the mobile terminal 100 for network access, the required network quality parameter to be preferentially considered varies with different service types. For example, when the mobile terminal 100 is used to watch a video, online video buffering is required, so the throughput rate needs to be preferentially considered. When the mobile terminal 100 is used to play a game which requires a low delay, the delay needs to be preferentially considered. To comprehensively consider the application type and the required network quality parameter of the current application during the selection of a network to be connected, the application type and the required network quality parameter of the current application run in the mobile terminal 100 are acquired.

The required network quality parameter is a network QoS requirement of the current application run in the mobile terminal 100. For example, if the current application run in the mobile terminal 100 requires a throughput rate of 1 Mbits/second, the throughput rate of 1 Mbits/second is the current required network quality parameter of the mobile terminal 100.

For S300, a preferential parameter option is obtained according to the application type, where the preferential parameter option is used for determining a type of a network quality parameter to be preferentially considered in network selection. For example, when the current application run in the mobile terminal 100 is watching a video and the throughput rate needs to be preferentially considered, the preferential parameter option is the throughput rate; when the current application run in the mobile terminal 100 is playing a game and the delay needs to be preferentially considered, the preferential parameter option is the delay. It can be understood that in some other embodiments, other network QoS parameters such as packet loss rate of data transmitted, bandwidth of network transmission, and delay jitter may also be used as the preferential parameter option according to actual requirements.

For S400, a plurality of target parameters of the same type are determined from the first network quality parameter, the second network quality parameter, and the required network quality parameter according to the preferential parameter option, the plurality of target parameters are compared, and network selection is performed to obtain a selection result.

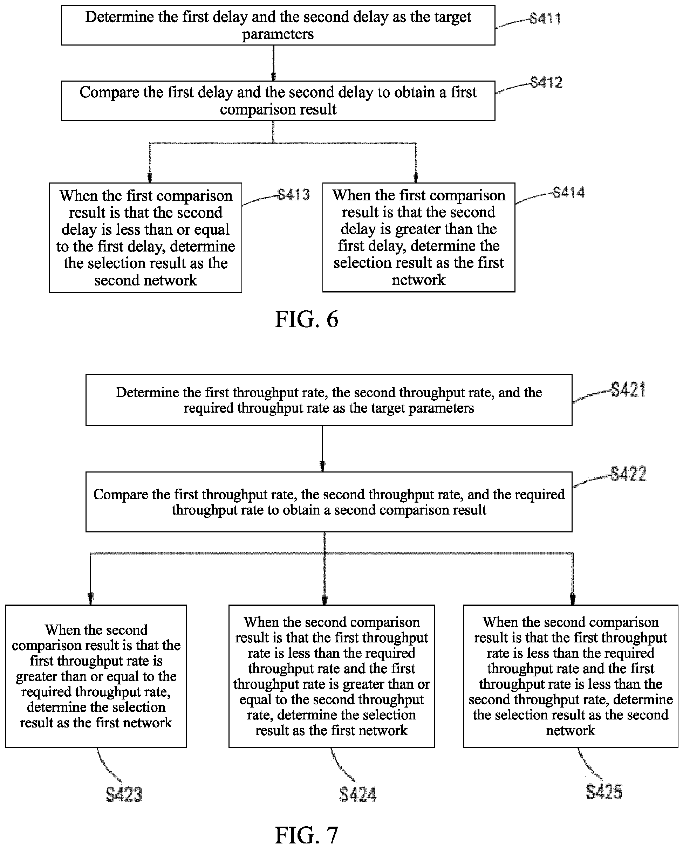

Referring to FIG. 6, in an embodiment, in a case where the preferential parameter option is a delay, S400 includes, but not limited to, the following steps S411 to S414.

At S411, the first delay and the second delay are determined as the target parameters.

At S412, the first delay and the second delay are compared to obtain a first comparison result.

At S413, when the first comparison result is that the second delay is less than or equal to the first delay, the selection result is determined as the second network.

At S414, when the first comparison result is that the second delay is greater than the first delay, the selection result is determined as the first network.

It can be understood that when the preferential parameter option is the delay, the target parameters of the delay type are determined from the first network quality parameter, the second network quality parameter, and the required network quality parameter, i.e., the first delay and the second delay are determined as the target parameters. Values of the first delay of the Wi-Fi network and the second delay of the mobile network are compared, and the network with a lower delay is selected from the Wi-Fi network and the mobile network as a network to be connected. When the second delay is less than or equal to the first delay, the selection result is the mobile network. When the second delay is greater than the first delay, the selection result is the Wi-Fi network.

Referring to FIG. 7, in an embodiment, in a case where the preferential parameter option is a throughput rate, S400 includes, but not limited to, the following steps S421 to S425.

At S421, the first throughput rate, the second throughput rate, and the required throughput rate are determined as the target parameters.

At S422, the first throughput rate, the second throughput rate, and the required throughput rate are compared to obtain a second comparison result.

At S423, when the second comparison result is that the first throughput rate is greater than or equal to the required throughput rate, the selection result is determined as the first network.

At S424, when the second comparison result is that the first throughput rate is less than the required throughput rate and the first throughput rate is greater than or equal to the second throughput rate, the selection result is determined as the first network.

At S425, when the second comparison result is that the first throughput rate is less than the required throughput rate and the first throughput rate is less than the second throughput rate, the selection result is determined as the second network.

It can be understood that when the preferential parameter option is the throughput rate, the target parameters of the throughput rate type are determined from the first network quality parameter, the second network quality parameter, and the required network quality parameter, i.e., the first throughput rate, the second throughput rate, and the required throughput rate are determined as the target parameters. Values of the first throughput rate, the second throughput rate, and the required throughput rate are compared. The value of the first throughput rate of the Wi-Fi network and the value of the required throughput rate of the current application run in the mobile device are preferentially compared to determine whether the first throughput rate of the Wi-Fi network can meet the required throughput rate of the current application run in the mobile device. When the first throughput rate of the Wi-Fi network is greater than or equal to the required throughput rate of the current application run in the mobile device, the selection result is the Wi-Fi network. When the first throughput rate of the Wi-Fi network is less than the required throughput rate of the current application run in the mobile device, the value of the first throughput rate of the Wi-Fi network and the value of the second throughput rate of the mobile network needs to be compared, and the network with a higher throughput rate is selected from the Wi-Fi network and the mobile network as the network to be connected. When the first throughput rate of the Wi-Fi network is greater than or equal to the second throughput rate of the mobile network, the selection result is the Wi-Fi network. When the first throughput rate of the Wi-Fi network is less than the second throughput rate of the mobile network, the selection result is the mobile network.

Definitely, in some other embodiments, when other network quality parameters are used as the preferential parameter option, e.g., when the preferential parameter option is a packet loss rate, a packet loss rate of the first network, a packet loss rate of the second network, and a packet loss rate required by the current application are selected as the target parameters from the first network quality parameter of the first network, the second network quality parameter of the second network, and the required network quality parameter of the current application run in the mobile terminal 100, and the packet loss rate of the first network, the packet loss rate of the second network, and the packet loss rate required by the current application are compared to select an optimal network from the first network and the second network.

For S500, a target network is determined from the first network and the second network according to the selection result and the target network is connected to. When the selection result is the first network, i.e., the Wi-Fi network, the mobile terminal 100 connects to the Wi-Fi network. When the selection result is the second network, i.e., the mobile network, the mobile terminal 100 connects to the mobile network.

It can be understood that the network connection method is also applicable to two or more networks.

The mobile terminal 100 is provided with a network connection display interface. The user may manually perform network switching through the network connection display interface. In addition, the network connection display interface is provided with a switch option, and the switch option is used for causing the mobile terminal 100 to enable or disable the network connection method. When the user turns on the switch option, the mobile terminal 100 enables and executes the network connection method. When the user turns off the switch option, the mobile terminal 100 disables the network connection method.

In an embodiment, the mobile terminal 100 periodically executes the network connection method, i.e., periodically executes the steps S100 to S500, to dynamically switch to an appropriate network path according to an actual application situation. For example, the mobile terminal 100 executes the steps S100 to S500 once every minute. Definitely, in some other embodiments, the periodicity of execution may be set according to an actual application requirement. Further, an input option may be configured in the network connection display interface of the mobile terminal 100, and the user may input a periodicity parameter in the input option, such that the mobile terminal 100 executes the network connection method according to the periodicity parameter.

In another embodiment, the mobile terminal 100 executes the network connection method when the current application being run is switched. A network to which the mobile terminal 100 is previously connected is selected by the network connection method according to an application type of the previous application, and when the mobile terminal 100 switches from running the previous application to running a new application, the mobile terminal 100 executes the network connection method, and determines an optimal network from the first network and the second network according to an application type of the new application.

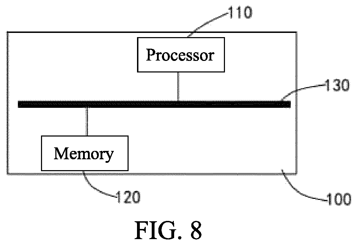

An embodiment of the present disclosure further provides a mobile terminal 100. FIG. 8 is a structural diagram of the mobile terminal 100. The mobile terminal 100 includes one or more processors 110 and one or more memories 120. The processor 110 and the memory 120 may be connected by a bus 130 or in other ways.

The memory 120, as a non-transitory computer-readable storage medium, may be configured for storing a non-transitory software program and a non-transitory computer-executable program, for example, the network connection method in the embodiments of the present disclosure. The processor 110 executes the non-transitory software program and the non-transitory computer-executable program stored in the memory 120, to implement the network connection method in the embodiments of the present disclosure.

In this embodiment, a first network quality parameter of a first network and a second network quality parameter of a second network are acquired; an application type and a required network quality parameter of a current application run in the mobile terminal 100 are acquired; a preferential parameter option for determining a type of a network quality parameter to be preferentially considered in network selection is obtained according to the application type; a plurality of target parameters of the same type are determined from the first network quality parameter, the second network quality parameter, and the required network quality parameter according to the preferential parameter option, the plurality of target parameters are compared, and network selection is performed to obtain a selection result; and a target network is determined from the first network and the second network according to the selection result and the target network is connected to. According to the type and the network QoS requirement of the current application run in the mobile terminal 100, the mobile terminal 100 dynamically connects to a network that can meet the requirement, thereby providing an optimal network service and improving the user's network experience.

The memory 120 may include a program area and a data area. The program area may store an operating system, and an application required by at least one function. The data area may store data and the like required for executing the network connection method in the embodiments of the present disclosure. In addition, the memory 120 may include a high-speed random access memory, and may also include a non-transitory memory, e.g., at least one magnetic disk storage device, flash memory device, or other non-transitory solid-state storage device. In some implementations, the memory 120 optionally includes memories 120 located remotely from the processor 110, and the remote memories 120 may be connected to the mobile terminal 100 via a network. Examples of the network include, but not limited to, the Internet, an intranet, a local area network, a mobile communication network, and combinations thereof.

The non-transitory software program and the non-transitory computer-executable program required for implementing the network connection method in the embodiments of the present disclosure are stored in the memory 120 which, when executed by one or more processors 110, cause the one or more processors 110 to implement the network connection method in the embodiments of the present disclosure.

The node embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

An embodiment of the present disclosure provides a computer-readable storage medium, storing computer-executable instructions which, when executed by a processor or controller, for example, by a processor in the embodiment described above, may cause the processor to implement the network connection method of the above embodiments.

In this embodiment, a first network quality parameter of a first network and a second network quality parameter of a second network are acquired; an application type and a required network quality parameter of a current application run in the mobile terminal 100 are acquired; a preferential parameter option for determining a type of a network quality parameter to be preferentially considered in network selection is obtained according to the application type; a plurality of target parameters of the same type are determined from the first network quality parameter, the second network quality parameter, and the required network quality parameter according to the preferential parameter option, the plurality of target parameters are compared, and network selection is performed to obtain a selection result; and a target network is determined from the first network and the second network according to the selection result and the target network is connected to. According to the type and the network QoS requirement of the current application run in the mobile terminal 100, the mobile terminal 100 dynamically connects to a network that can meet the requirement, thereby providing an optimal network service and improving the user's network experience.

An embodiment of the present disclosure includes: acquiring a first network quality parameter of a first network and a second network quality parameter of a second network; acquiring an application type and a required network quality parameter of a current application run in a mobile terminal; obtaining a preferential parameter option according to the application type, where the preferential parameter option is used for determining a type of a network quality parameter to be preferentially considered in network selection; determining a plurality of target parameters of the same type from the first network quality parameter, the second network quality parameter, and the required network quality parameter according to the preferential parameter option, comparing the plurality of target parameters, and performing network selection to obtain a selection result; and determining a target network from the first network and the second network according to the selection result and connecting to the target network. According to the type and the network QoS requirement of the current application run in the mobile terminal, the mobile terminal dynamically connects to a network that can meet the requirement, thereby providing an optimal network service and improving the user's network experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A network connection method, applied to a mobile terminal, the network connection method comprising:
acquiring a first network quality parameter of a first network and a second network quality parameter of a second network;
acquiring an application type and a required network quality parameter of a current application run in a mobile terminal;
obtaining a preferential parameter option according to the application type, wherein the preferential parameter option is used for determining a type of a network quality parameter to be preferentially considered in network selection;
determining a plurality of target parameters of the same type from the first network quality parameter, the second network quality parameter, and the required network quality parameter according to the preferential parameter option, comparing the plurality of target parameters, and performing network selection to obtain a selection result; and
determining a target network from the first network and the second network according to the selection result and connecting to the target network.

2. The network connection method of claim 1, wherein acquiring a first network quality parameter of a first network and a second network quality parameter of a second network comprises:
acquiring a first throughput rate and a first delay of the first network; and
acquiring a second throughput rate and a second delay of the second network.

3. The network connection method of claim 2, wherein the mobile terminal is connected to a wireless data terminal through the first network, and the wireless data terminal is connected to a network providing terminal; and acquiring a first throughput rate and a first delay of the first network comprises:
acquiring a third throughput rate and a third delay of the network providing terminal corresponding to the wireless data terminal;
obtaining the first throughput rate according to the third throughput rate; and
obtaining the first delay according to the third delay.

4. The network connection method of claim 3, wherein acquiring a third throughput rate and a third delay of the network providing terminal corresponding to the wireless data terminal comprises:
sending a query request message to the wireless data terminal; and
receiving response information sent by the wireless data terminal in response to the query request message, wherein the response information comprises the third throughput rate and the third delay.

5. The network connection method of claim 3, wherein obtaining the first throughput rate according to the third throughput rate comprises: determining the third throughput rate as the first throughput rate; and
obtaining the first delay according to the third delay comprises: determining the third delay as the first delay.

6. The network connection method of claim 3, wherein obtaining the first throughput rate according to the third throughput rate comprises:
acquiring an agreed throughput rate between the mobile terminal and the wireless data terminal; and
selecting the smaller one of a value of the third throughput rate and a value of the agreed throughput rate as the first throughput rate.

7. The network connection method of claim 3, wherein obtaining the first delay according to the third delay comprises:
acquiring an additional delay between the mobile terminal and the wireless data terminal; and
determining a sum of the third delay and the additional delay as the first delay.

8. The network connection method of claim 2, wherein determining a plurality of target parameters of the same type from the first network quality parameter, the second network quality parameter, and the required network quality parameter according to the preferential parameter option, comparing the plurality of target parameters, and performing network selection to obtain a selection result comprises:
in response to the preferential parameter option being a delay, determining the first delay and the second delay as the target parameters;
comparing the first delay and the second delay to obtain a first comparison result;
in response to the first comparison result being that the second delay is less than or equal to the first delay, determining the selection result as the second network; and
in response to the first comparison result being that the second delay is greater than the first delay, determining the selection result as the first network.

9. The network connection method of claim 2, wherein the required network quality parameter comprises a required throughput rate; and determining a plurality of target parameters of the same type from the first network quality parameter, the second network quality parameter, and the required network quality parameter according to the preferential parameter option, comparing the plurality of target parameters, and performing network selection to obtain a selection result comprises:
in response to the preferential parameter option being a throughput rate, determining the first throughput rate, the second throughput rate, and the required throughput rate as the target parameters;
comparing the first throughput rate, the second throughput rate, and the required throughput rate to obtain a second comparison result;
in response to the second comparison result being that the first throughput rate is greater than or equal to the required throughput rate, determining the selection result as the first network;
in response to the second comparison result being that the first throughput rate is less than the required throughput rate and the first throughput rate is greater than or equal to the second throughput rate, determining the selection result as the first network; and
in response to the second comparison result being that the first throughput rate is less than the required throughput rate and the first throughput rate is less than the second throughput rate, determining the selection result as the second network.

10. The network connection method of claim 1, wherein the network connection method is performed periodically or triggered by switching of the current application.

11. A mobile terminal, comprising: a memory, a processor, and a computer program stored in the memory and executable by the processor, wherein the computer program, when executed by the processor, causes the processor to perform the network connection method of any one of claims 1 to 10.

12. The mobile terminal of claim 11, wherein the mobile terminal is provided with a network connection display interface, the network connection display interface is provided with a switch option, and the switch option is used for causing the mobile terminal to enable or disable the network connection method.

13. A computer-readable storage medium, storing computer-executable instructions which, when executed by a processor, cause the processor to perform the network connection method of any one of claims 1 to 10.
